# EUROPEAN PATENT APPLICATION

(11) **EP 2 015 500 A1**
(43) Date of publication of application: **14.01.2009**
(21) Application number: 07742556.9
(22) Date of filing: 26.04.2007
(51) Int. Cl.: H04L 1/18, H04L 1/00, H04Q 7/38

(54) **WIRELESS COMMUNICATING METHOD AND WIRELESS COMMUNICATING DEVICE**

(30) Priority: 01.05.2006 JP 2006128000
(71) Applicant: NTT DoCoMo, Inc., Chiyoda-ku Tokyo 100-6150 (JP)
(72) Inventor: HARADA, Atsushi, Tokyo 100-6150 (JP); UMESH, Anil, Tokyo 100-6150 (JP)
(74) Representative: HOFFMANN EITLE
(86) International application number: PCT/JP2007/059121
(87) International publication number: WO 2007/129600

(57) **Abstract**

One object of the present invention is to provide a simple layer 2 protocol that makes it possible to adaptively retransmit data by the RLC layer according to the variation of radio channel conditions without increasing the number of PDU headers. A disclosed radio communication method includes the steps of determining whether a unit data block is to be transmitted for the first time by the RLC layer or to be retransmitted; if the unit data block is to be retransmitted, determining whether it is possible to retransmit the unit data block with a transmission time interval used for the first transmission; and if it is not possible to retransmit the unit data block with the transmission time interval used for the first transmission, setting a transmission time interval longer than the transmission time interval used for the first transmission for a downlink channel and/or an uplink channel.

## Description

### TECHNICAL FIELD

The present invention generally relates to radio communication technologies. More particularly, the present invention relates to technologies for reducing overhead related to retransmission by the radio link control (RLC) layer.

### BACKGROUND ART

Objectives of next-generation communication systems include providing stable communications for a large number of users in addition to increasing the communication speed.

For this purpose, in high speed downlink packet access (HSDPA), hybrid automatic repeat request (ARQ) is employed to control retransmission for correcting transmission errors. Hybrid ARQ includes an error correction function in addition to functions provided by the standard ARQ. In hybrid ARQ, error correcting code is added to data to be transmitted to correct errors and thereby to reduce the number of packet retransmissions. Also in hybrid ARQ, retransmission is performed directly by the physical layer to reduce delay, and if retransmission data exceed the amount that can be handled by the physical layer, the data are retransmitted by the RLC layer to improve transmission reliability.

In layer 2 composed of the RLC layer and the media access control (MAC) layer, data to be transmitted are divided into small protocol data units (RLC-PDUs and MAC-PDUs) with fixed sizes. The probability of a packet error increases as the size of a packet increases. Therefore, to reduce the error rate, each packet is divided into small PDUs.

Meanwhile, there is a method where the sizes of PDUs are changed according to conditions of a wireless section. In this method, large RLC-PDU and MAC-PDU sizes are used when radio channel conditions are good and small RLC-PDU and MAC-PDU sizes are used when radio channel conditions are poor.

However, since the radio channel conditions change from moment to moment, a PDU size used when transmitting a packet for the first time may become too large when retransmitting the packet. In such a case, deferring the retransmission until the radio channel conditions improve may increase delay. On the other hand, retransmitting data before the radio channel conditions improve may result in another retransmission.

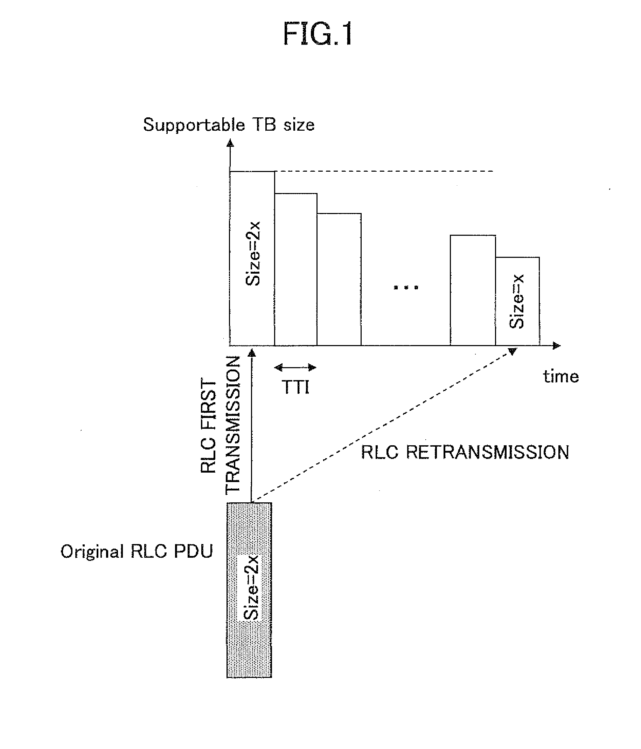

A method has been proposed to solve or reduce this problem. In the proposed method, each PDU is subdivided into transmission units with a size that can be retransmitted (see, for example, 3GPP TSG-RAN2 Meeting #50, Sophia Antipolis, France, 09-13, January, 2006, Tdoc R2-060076). The proposed method is described below with reference to FIG. 1.

In FIG. 1, it is assumed that the RLC-PDU size at the first transmission is 2x. As shown by a dotted line, with the radio channel conditions at the first transmission, the size of a data block (transport block (TB)) transmittable by a transport channel is 2x, and therefore an RLC-PDU with a size of 2x can be transmitted. A PDU is transmitted during a transmission time interval (TTI).

If a packet transmission error is detected at a receiving end, a retransmission request signal is sent from the receiving end after a certain period of time (round trip time (RTT)). Here, if the radio channel conditions are worse than those at the first transmission and the size of a transmittable transport block is smaller, retransmitting the packet using the same PDU size may result in another retransmission. Therefore, each RLC-PDU is further divided into transmission units with a size of "x" to reliably retransmit the packet.

Also, a method to reduce overhead in the first transmission has been proposed. In the proposed method, the transmission time interval (TTI) is changed according to the size of a packet to be transmitted (see, for example, 3GPP TSG-RAN WG2 #52, Athens, Greece, 27-31 March 2006, R2-060944).

### DISCLOSURE OF INVENTION

### PROBLEMS TO BE SOLVED BY THE INVENTION

However, the above method of subdividing RLC-PDUs necessitates a complicated header structure. Specifically, headers of a subdivided RLC-PDU or a MAC-PDU may have to include additional information such as an identifier indicating the original RLC-PDU that has been subdivided and an indicator indicating the size of the subdivided RLC-PDU.

One object of the present invention is to provide a simple layer 2 protocol that makes it possible to adaptively retransmit data by the RLC layer according to the variation of radio channel conditions without increasing the number of RLC-PDU or MAC-PDU headers.

### MEANS FOR SOLVING THE PROBLEMS

According to embodiments of the present invention, if it is difficult, because of degradation in radio channel quality, to retransmit an RLC-PDU using the same transmission time interval (TTI) used for its first transmission and without changing the PDU size, a TTI of a downlink shared channel and/or an uplink shared channel is set longer than that used for the first transmission instead of dividing the RLC-PDU.

According to an aspect of the present invention, a radio communication method includes the steps of (a) determining whether a unit data block is to be transmitted for the first time by an RLC layer or to be retransmitted by the RLC layer; (b) if the unit data block is to be retransmitted, determining whether it is possible to retransmit the unit data block with a transmission time interval used for the first transmission; and (c) if it is not possible to retransmit the unit data block with the transmission time interval used for the first transmission, setting a transmission time interval longer than the transmission time interval used for the first transmission for a downlink channel and/or an uplink channel.

According to an embodiment of the present invention, if it is possible to retransmit the unit data block with the transmission time interval used for the first transmission, the unit data block is retransmitted using the same transmission time interval as that used for the first transmission.

According to another embodiment of the present invention, if the unit data block is to be transmitted for the first time by the RLC layer, the transmission time interval for the first transmission is determined based on channel quality information.

According to still another embodiment of the present invention, if the unit data block is to be transmitted for the first time by the RLC layer, the transmission time interval for the first transmission is set at a predetermined value.

### ADVANTAGEOUS EFFECT OF THE INVENTION

A radio communication method according to an embodiment of the present invention makes it possible to prevent an increase in retransmission frequency and the number of headers, and thereby makes it possible to reduce overhead.

### BRIEF DESCRIPTION OF THE DRAWINGS

FIG. 1 is a drawing illustrating a conventional method of subdividing a PDU for retransmission;
FIG. 2 is a drawing illustrating a method of adjusting a TTI for retransmission according to an embodiment of the present invention;
FIG. 3 is a flowchart showing a process of adjusting a TTI according to an embodiment of the present invention; and
FIG. 4 is a schematic block diagram of a radio communication device according to an embodiment of the present invention.

### EXPLANATION OF REFERENCES

- 10: Radio communication device (radio base station)
- 11: Receiving unit
- 12: RLC layer control unit
- 13: Upper layer data reception unit
- 14: Radio link control unit
- 15: Scheduler
- 16: Hybrid ARQ control unit (retransmission control unit)
- 17: Scheduling information generating unit
- 18: Transmitting unit
- 21: PDU retransmission determining unit
- 22: TTI determining unit

### BEST MODE FOR CARRYING OUT THE INVENTION

The best mode for carrying out the invention is described based on the following embodiments with reference to the accompanying drawings.

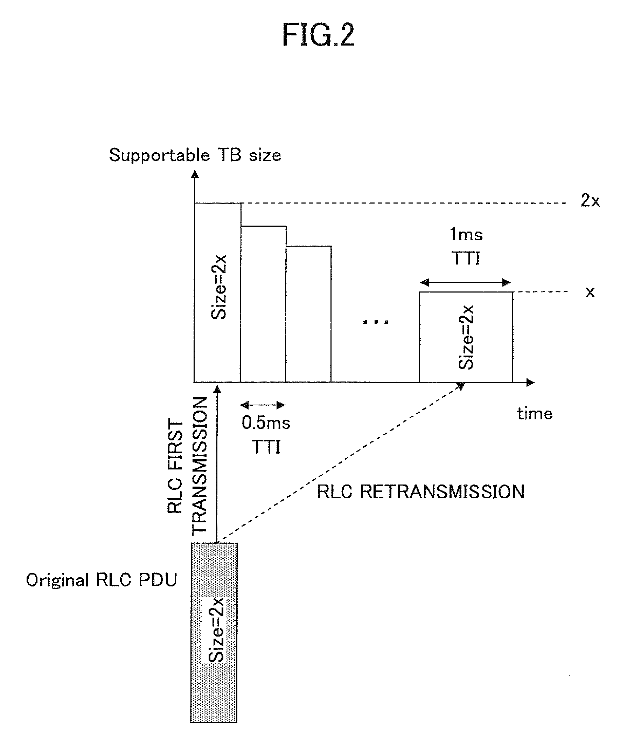

FIG. 2 is a drawing illustrating a basic concept of the present invention. In FIG. 2, it is assumed that the size of an original RLC-PDU at the first transmission is 2x. As shown by an upper dotted line, with the radio channel conditions at the first transmission, the size of a data block (transport block (TB)) transmittable by a transport channel is 2x, and therefore an RLC-PDU with a size of 2x can be transmitted. It is also assumed that the transmission time interval (TTI) at the first transmission has a length of one subframe and one subframe is set at 0.5 ms.

If a packet transmission error is detected at a receiving end, a retransmission request signal is sent from the receiving end after a certain period of time (round trip time (RTT)). In this example, the radio channel conditions degrade as time passes and the size of a transmittable transport block at this point is reduced to "x" as shown by a lower dotted line.

Therefore, to be able to retransmit the RLC-PDU with a size of 2x, the TTI is changed to 1 ms (two subframes) that is twice as long as the original TTI. This makes it possible to perform adaptive retransmission control by just using a variable TTI or dynamic TTI control method without complicating the header structure.

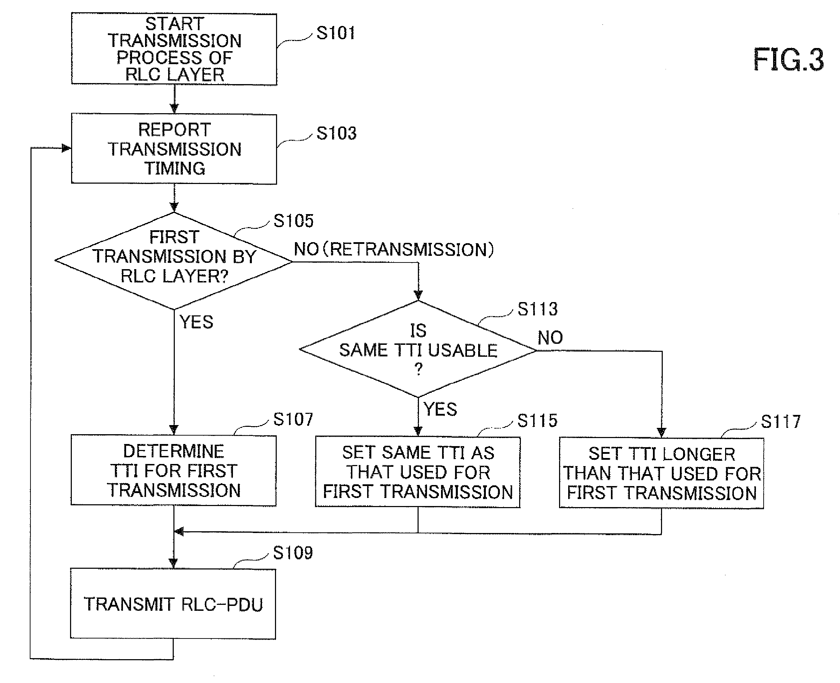

FIG. 3 is a flowchart showing a process of adjusting a TTI performed by a scheduler of a radio communication device. In step S101, a transmission process of the RLC layer is started. In step S103, the scheduler reports the transmission timing of an RLC-PDU. In this step, if multiple subcarriers are used, the scheduler also reports allocated frequency resources. In step S105, the scheduler determines whether the packet is to be transmitted for the first time by the RLC layer. If the packet is to be transmitted for the first time (YES in S105), the scheduler determines the TTI for the first transmission in step S107. The TTI for the first transmission may be predetermined as a default TTI, for example, with a length of one frame. Alternatively, the TTI for the first transmission may be determined based on communication conditions of a mobile station (user terminal) such as the traveling speed, the location in a cell, the throughput, and the number of retransmissions.

If it is not the first transmission of the packet by the RLC layer, i.e., if the packet is to be retransmitted (NO in S105), the scheduler determines whether it is possible to retransmit the RLC-PDU without changing the current TTI length in step S113.

If it is possible to retransmit the RLC-PDU with the same TTI used for the first transmission (YES in S113), the scheduler sets the same TTI in step S115. If it is not possible to retransmit the RLC-PDU with the same TTI used for the first transmission (YES in S113), the scheduler sets a TTI (e.g., with a length of two subframes) that is longer than the TTI used for the first transmission in step S117.

After the TTI is determined in step S107, S115, or S117, the RLC-PDU is transmitted in step S109. After the RLC-PDU is transmitted, the process returns to step S103 and the next RLC-PDU is processed.

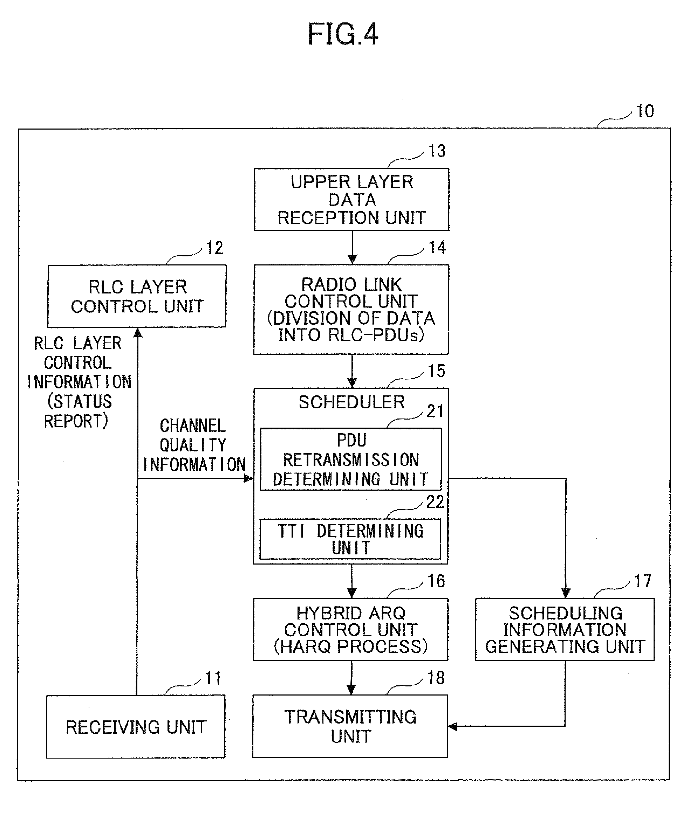

FIG. 4 shows a schematic configuration of a radio communication device 10. The radio communication device 10 is typically used as a radio base station, but may also be used as other types of radio communication devices.

The radio communication device 10 includes a receiving unit 11, an RLC layer control unit 12, an upper layer data reception unit 13, a radio link control unit 14, a scheduler 15, a hybrid ARQ control unit 16, a scheduling information generating unit 17, and a transmitting unit 18. The scheduler 15 includes a PDU retransmission determining unit 21 for determining whether an RLC-PDU is to be transmitted for the first time or to be retransmitted, and a TTI determining unit 22 for determining a TTI based on the result of the PDU retransmission determining unit 21.

The receiving unit 11 receives channels from mobile stations. The receiving unit 11 extracts reception quality information such as a channel quality indicator (CQI) from received information and sends the reception quality information to the scheduler 15. Also, the receiving unit 11 extracts control information (e.g., a status report) for the RLC layer from received information and sends the control information to the RLC layer control unit 12. Under the control of the RLC layer control unit 12, the radio link control unit 14 divides data to be transmitted into RLC-PDUs with a predetermined size and controls retransmission by the RLC layer.

The PDU retransmission determining unit 21 of the scheduler 15 determines whether an RLC-PDU is to be transmitted for the first time or to be retransmitted as shown by the flowchart of FIG. 3. If the RLC-PDU is to be retransmitted, the PDU retransmission determining unit 21 further determines whether the RLC-PDU can be retransmitted with the current TTI length. If it is difficult to complete retransmission of the RLC-PDU with the current TRI length, the TTI determining unit 22 increases the TRI. Also, the TTI determining unit 22 may be configured to change the TTI for the first transmission based, for example, on the channel quality information even when the RLC-PDU is to be transmitted for the first time. Thus, the TTI determining unit 22 determines or changes the TTI for the first transmission of a downlink shared channel and/or an uplink shared channel, and also adjusts the TTI for retransmission based on current radio channel conditions.

The hybrid ARQ control unit 16 controls retransmission of MAC-PDUs generated from RLC-PDUs. The scheduling information generating unit 17 generates downlink scheduling information including TTI information determined by the scheduler 15 and sends the downlink scheduling information to the transmitting unit 18.

The transmitting unit 18 transmits transmission data in sequence according to scheduling results of the scheduler 15 and retransmission control information from the hybrid ARQ control unit 16.

The above configuration makes it possible to adjust a TTI and thereby to retransmit a unit data block by the RLC layer without subdividing the unit data block when it is not possible to retransmit the unit data block with the current TTI length because of degradation of radio channel conditions.

This in turn makes it possible to prevent an increase in retransmission frequency and the number of headers, and thereby makes it possible to reduce overhead.

The present international application claims priority from Japanese Patent Application No. 2006-128000 filed on May 1, 2006, the entire contents of which are hereby incorporated herein by reference.

## Claims

1. A radio communication method, comprising the steps of:
determining whether a unit data block is to be transmitted for the first time by an RLC layer or to be retransmitted by the RLC layer;
if the unit data block is to be retransmitted, determining whether it is possible to retransmit the unit data block with a transmission time interval used for the first transmission; and
if it is not possible to retransmit the unit data block with the transmission time interval used for the first transmission, setting a transmission time interval longer than the transmission time interval used for the first transmission for a downlink channel and/or an uplink channel.

2. The radio communication method as claimed in claim 1, further comprising the step of:
if it is possible to retransmit the unit data block with the transmission time interval used for the first transmission, retransmitting the unit data block using the same transmission time interval as that used for the first transmission.

3. The radio communication method as claimed in claim 1, further comprising the step of:
if the unit data block is to be transmitted for the first time by the RLC layer, determining the transmission time interval for the first transmission based on channel quality information.

4. The radio communication method as claimed in claim 1, further comprising the step of:
if the unit data block is to be transmitted for the first time by the RLC layer, setting the transmission time interval for the first transmission at a predetermined value.

5. A radio communication device, comprising:
a determining unit configured to determine whether a unit data block is to be transmitted for the first time by an RLC layer or to be retransmitted by the RLC layer and if the unit data block is to be retransmitted, to determine whether it is possible to retransmit the unit data block with a transmission time interval used for the first transmission;
a TTI determining unit configured to set a transmission time interval longer than the transmission time interval used for the first transmission for a downlink channel and/or an uplink channel if it is not possible to retransmit the unit data block with the transmission time interval used for the first transmission; and
a transmitting unit configured to transmit the unit data block using the set transmission time interval.

6. The radio communication device as claimed in claim 5, wherein if the determining unit determines that it is possible to retransmit the unit data block with the transmission time interval used for the first transmission,
the TTI determining unit is configured to set the same transmission time interval as that used for the first transmission, and
the transmitting unit is configured to retransmit the unit data block using the same transmission time interval.

7. The radio communication device as claimed in claim 5, wherein if the determining unit determines that the unit data block is to be transmitted for the first time, the TTI determining unit is configured to determine the transmission time interval for the first transmission based on channel quality information.

8. The radio communication device as claimed in claim 5, wherein if the determining unit determines that the unit data block is to be transmitted for the first time, the TTI determining unit is configured to set the transmission time interval for the first transmission at a predetermined value.
